**Europäisches Patentamt**

**European Patent Office**

**Office européen des brevets**

(11) Veröffentlichungsnummer: **0 066 668**
**B1**

(12) **EUROPÄISCHE PATENTSCHRIFT**

(45) Veröffentlichungstag der Patentschrift:
09.04.86

(21) Anmeldenummer: 82101049.3

(22) Anmeldetag: 12.02.82

(51) Int. Cl.⁴: **H 04 M 3/42, H 04 Q 5/00**

(54) Verfahren zum Betrieb einer Fernsprechanlage.

(30) Priorität: 04.06.81 CH 3659/81

(43) Veröffentlichungstag der Anmeldung:
15.12.82 Patentblatt 82/50

(45) Bekanntmachung des Hinweises auf die Patenterteilung:
09.04.86 Patentblatt 86/15

(84) Benannte Vertragsstaaten:
CH LI NL

(56) Entgegenhaltungen:
AT - B - 323 238
DE - B - 1 218 545
DE - B - 1 243 248
DE - C - 716 654

(73) Patentinhaber: SIEMENS-ALBIS
AKTIENGESELLSCHAFT, EGA1/Verträge und Patente
Postfach, CH-8047 Zürich (CH)

(72) Erfinder: Rippstein, Eugen, Brunnenzelgstrasse,
CH-8904 Aesch (CH)
Erfinder: Weisigk, Günther, Lärchenstrasse 32,
CH-8903 Birmensdorf (CH)

LIBER, STOCKHOLM 1986

## Beschreibung

Die vorliegende Erfindung betrifft ein Verfahren gemäss dem Oberbegriff des Patentanspruches 1.

Sollen in einer Fernsprechanlage, in deren Teilnehmeranschlusskabel sämtliche Leitungen belegt sind, nachträglich weitere Anschlussmöglichkeiten geschaffen werden, so können als Uebergangslösung bis zur Neuverlegung der entsprechenden Kabel die dringendsten Anschlusswünsche mit Hilfe sogenannter Zweier- oder Mehrfachanschlüsse befriedigt werden. Dies gilt auch für Anlagen, in denen aus Kostengründen ein vorgegebener Ausbaustand nicht überschritten werden soll. Dabei haben die am Mehrfachanschluss angeschlossenen Teilnehmer die gleichen Rufnummern und können miteinander nicht in Verbindung treten. Letzteres ist jedoch insbesondere dann nicht erforderlich, wenn die Teilnehmerapparate dieser Teilnehmer sich im gleichen Raum befinden oder wenn mehrere Teilnehmer ein und denselben Teilnehmerapparat benützen. Hingegen ist es zweckmässig, wenn diesen Teilnehmern von allem Anfang an eine beliebige individuelle Rufnummer zugeordnet werden kann und diese Teilnehmer ferner in einer Auf und Weise gerufen werden können, dass jeder Teilnehmer sofort weiss, ob ein Anruf ihm gilt oder nicht.

Aus der DE—B1—12 18 545 ist ein Verfahren zum automatischen Herbeirufen eines Fernsprechteilnehmers zu einer gemeinsam benutzten Sprechstelle bekannt, bei dem den Teilnehmern der Sprechstelle unterschiedliche Rufnummern zugeordnet sind und jeder gerufene Teilnehmer über einen individuellen Wecker gerufen wird. Dadurch, dass alle Wecker akustisch das gleiche Signal abgeben, kann ein gerufener Teilnehmer nicht in jedem Fall unmittelbar feststellen, ob der Anruf für ihn bestimmt ist oder nicht. Ueberdies ist es nicht möglich, bei diesem Verfahren einem Teilnehmer eine völlig beliebige Rufnummer zuzuordnen; die Rufnummer muss vielmehr mit Rücksicht auf die Rufnummer der gemeinsamen Sprechstelle gewählt werden.

Die DE—B1—12 43 248 beschreibt eine Anordnung für Zweieranschlüsse, deren Teilnehmen unterschiedliche Rufnummern zugeordnet sind. Die Unterscheidung der beiden Teilnehmer erfolgt über eine spezielle Einrichtung, wobei jedoch auch hier keine für den einen oder anderen Teilnehmer charakteristische Rufsignalisierung vorgesehen ist.

Die vorliegenden Erfindung liegt daher die Aufgabe zugrunde, ein Verfahren anzugeben, das die Realisierung der oben genannten Bedingungen in einfacher Weise ermöglicht. Die Lösung dieser Aufgabe gelingt mit einem Verfahren, wie es im Anspruch 1 gekennzeichnet ist, Ausgestaltungen des Verfahrens sind in weiteren Ansprüchen angegeben.

Ein Vorteil der Erfindung ist darin zu sehen, dass insbesondere in einer Fernsprechanlage mit Anrufumleitungsmöglichkeit es ohne nennenswerten Aufwand möglich ist, Mehrfachanschlüsse mit den zugehörigen Teilnehmern individuell zugeordneten Rufnummern zu schaffen. Im Fernsprechverzeichnis kann daher von allem Anfang an jedem Teilnehmer -unabhängig davon, ob er einen Einzel- oder einen Mehrfachanschluss besitzt- eine individuelle Rufnummer zugeordnet werden; spätere Aenderungen der Rufnummer von Mehrfachanschlussteilnehmern, die einen Einzelanschluss erhalten, müssen im Fernsprechverzeichnis nicht vorgenommen werden. Ein weiterer Vorteil der Erfindung ergibt sich daraus, dass durch Ausnutzung der bereits vorhandenen Anrufumleitungsmöglichkeit es relativ einfach zu bewerkstelligen ist, die zum individuellen Rufen von Teilnehmern eines Mehrfachanschlusses notwendigen Informationen bereitzustellen. Die Erfindung wird nachfolgend anhand von Zeichnungen beispeilsweise näher erläutert.

Es zeigt:

Fig. 1 das Konzept einer Fernsprechnebenstellenanlage mit verschiedenartigen Teilnehmeranschlüssen

Fig. 2 Einzelheiten zum Aufbau dieser Fernsprechnebenstellenanlage

Fig. 3 bis 6 Einzelheiten zur Erzeugung verschiedenartiger Rufsignalrhythmen in dieser Fernsprechnebenstellenanlage.

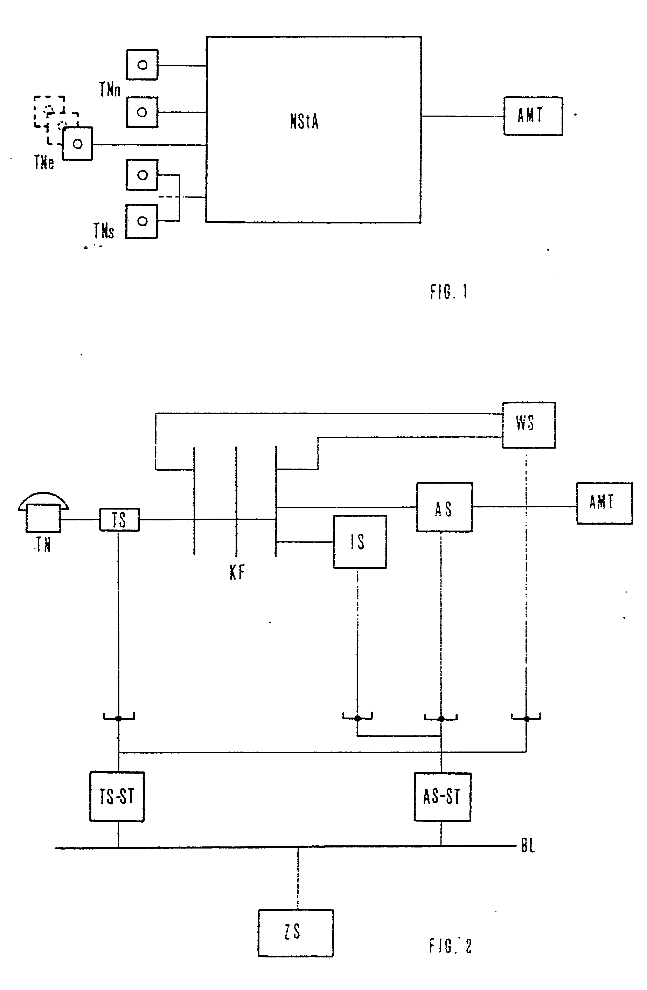

Figur 1 zeigt in einem groben Blockschaltbild eine Fernsprechnebenstellenanlage NStA mit Teilnehmeranschlüssen, denen je eine Rufnummer zugeordnet ist. Die an diese Teilnehmeranschlüsse angeschlossenen Teilnehmerstellen können verschiedenartig sein. So gibt es Teilnehmerstellen TNn, die wie üblich je einem einzigen Teilnehmer zugeordnet sind. Im weiteren gibt es Teilnehmerstellen Tne, die mehreren Teilnehmern zur Verfügung stehen, d.h. mehrere Teilnehmer benützen ein und denselben Telefonapparat. Schliesslich gibt es Teilnehmerstellen TNs, die an ein und demselben Anschluss, einem Mehrfachanschluss, angeschlossen sind. Die Teilnehmerstellen TNs können einander nicht anrufen. Durch nicht weiter beschriebene Mittel kann verhindert werden, dass die übrigen Teilnehmerstellen TNs eines Mehrfachanschlusses nicht in eine bereits bestehende Verbindung eintreten können. Ansonsten können die verschiedenartigen Teilnehmerstellen TNn, TNe, TNs untereinander beliebige Internverbindungen aufbauen sowie auch kommend und gehend mit dem öffentlichen Fernsprechnetz AMT verbunden werden. Die Fernsprechnebenstellenanlage NStA weist im besonderen noch die Möglichkeit der Anrufumleitung, d.h. für eine beliebige Teilnehmerstelle TN bestimmte Anrufe können während einer beliebigen Zeitspanne auf eine andere Teilnehmerstelle TN umgeleitet werden.

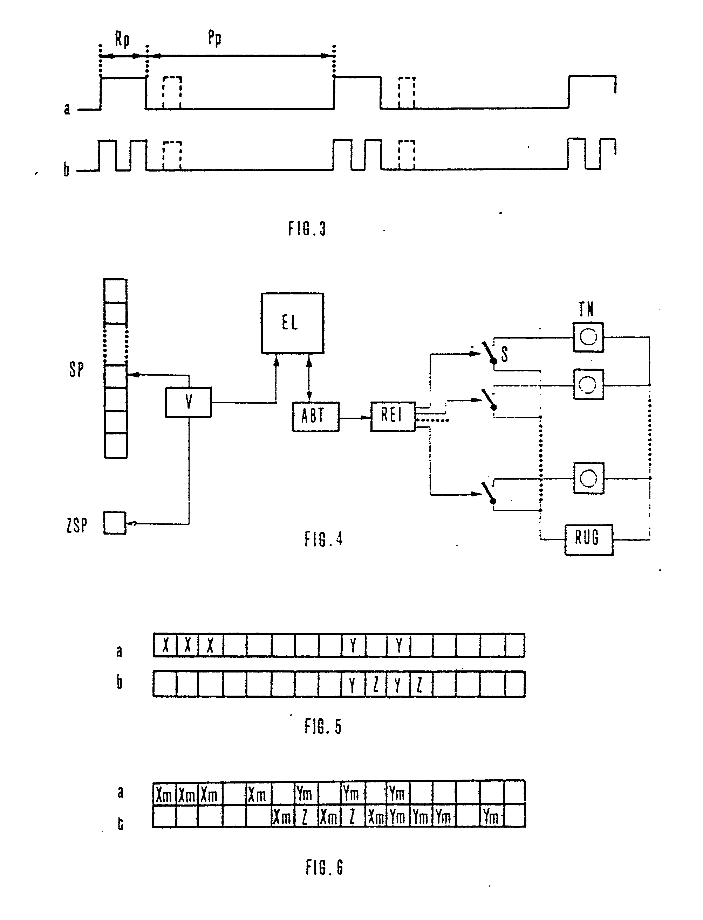

Fig. 2 zeigt weitere Einzelheiten der Nebenstellenanlage, soweit sie im Zusammenhang mit der Erfindung von Bedeutung sind. Bei den angeschlossenen Teilnehmerstellen TN handelt es sich wahlweise um eine der vorerwähnten Arten, also um Teilnehmerstellen TNn, TNe oder TNs. Die Bedeutung der gezeigten Systemteile wird aus der nachfolgenden kurzen Beschreibung der beim Aufbau einer interenen Verbindung zwischen zwei beliebigen Teilnehmerstellen TN in dieser Anlage ablaufenden Vorgänge ersichtlich.

Hebt ein Teilnehmer TN seinen Handapparat ab, wird in der zugehörigen Teilnehmeranschlussschaltung TS das Schliessen der Teilnehmerleitungsschleife erkannt. Das einer Vielzahl von Teilnehmern TN zugeordnete Teilnehmersteuerwerk TS-ST fragt ständig den Zustand der Teilnehmerleitungsschleifen dieser Teilnehmer nacheinander ab (Scan-Prinzip) und hält den ermittelten Zustand in einem Zustandsspeicher fest. In diesem Speicher ist somit der aktuelle Schleifenzustand, aller angeschlossenen Teilnehmer enthalten. Das Teilnehmersteuerwerk TS-ST erkennt innerhalb eines Abfragezyklus die Neubelegung durch den Teilnehmer TN und meldet diese Neubelegung dem zentralen Steuerwerk ZS, das daraufhin einen freien Wahlaufnahmesatz WS und einen freien Weg vom Teilnehmer TN über das Koppelfeld KF zu diesem Wahlaufnahmesatz WS sucht. Das Koppelfeld KF kann elektronische Koppelpunkte, wie z.B. Transistoren, aufweisen und ein- oder mehrstufig sein. Nach erfolgter Durchschaltung sendet der Wahlaufnahmesatz WS dem Teilnehmer TN den Wählton. Ein Wahlempfänger im Wahlaufnahmesatz WS nimmt die beispielsweise in einem $2\times\left(\frac{1}{4}\right)$ Frequenzcode eintreffenden Wählsignale auf, bestimmt die Frequenz und setzt die erkannte Kombination des Wählzeichens in ein Codewort um. Sobald der Wahlaufnahmesatz WS die erste Wahlziffer decodiert hat, gibt er diese an das Teilnehmersteuerwerk TS-ST, wo sie -wie auch alle nachfolgenden Ziffern -gespeichert und zudem an das zentrale Steuerwerk ZS weitergeleitet wird. Das zentrale Steuerwerk ZS bewertet die erste Ziffer; handelt es sich dabei nicht um eine Kennziffer, dann erkennt das zentrale Steuerwerk ZS den Wunsch nach einer Intern-(Haus-)verbindung und sucht demzufolge einen freien Internverbindungssatz IS und einen freien Weg über das Koppelfeld KF vom wählenden Teilnehmer TN zum freien Internverbindungssatz IS. Das zentrale Steuerwerk ZS steht zwecks Meldungsaustausch über ein Busleitungssystem BL sowohl mit dem erwähnten Teilnehmersteuerwerk TS-ST als auch mit einem der Steuerung von Interverbindungssätzen IS und Externverbindungssätzen AS dienenden Satzsteuerwerk AS-ST in Verbindung. Sobald die vom Teilnehmer TN ausgesendete Wahlinformation vollständig ist, werden die Ziffern vom Teilnehmersteuerwerk TS-ST dem zentralen Steuerwerk ZS übergeben.

Das zentrale Steuerwerk ZS enthält einen Speicher, in dem verschiedenartige kundenspezifische Daten festgehalten sind. So sind u.a. semipermanente Daten wie Teilnehmerberechtigungen, Kurzrufnummernziele und auch Anrufumleitungen eingetragen, welche Daten einfach und rasch verändert werden können. Eine Anrufumleitliste im genannten Speicher beinhaltet Informationen darüber, welche Teilnehmerstellen TN momentan umgeleitet und auf welche Teilnehmeranschlüsse diese umgeleitet sind. Wenn also das zentrale Steuerwerk ZS vom Teilnehmersteuerwerk TS-ST eine Rufnummer in Form einer völlständigen Ziffernfolge erhält, ermittelt das zentrale Steuerwerk ZS mit Hilfe der Anrufumleitliste, ob die dieser Rufnummer entsprechende Teilnehmerstelle TN umzuleiten ist oder nicht. Sobald der zu rufende Teilnehmer TN ermittelt ist, sucht das zentrale Steuerwerk ZS einen freien Weg vom Interverbindungssatz IS über das Koppelfeld KF zu diesem Teilnehmer TN und schaltet hierauf den Weg von dem eine Verbindung wünschenden Teilnehmer TN zum Internverbindungssatz IS durch. Hierauf wird dem gerufenen Teilnehmer ein Rufsignal aus seiner Teilnehmerschaltung und dem rufenden Teilnehmer ein Rufkontrollsignal aus dem Internverbindungssatz IS zugeführt. Wenn der gerufene Teilnehmer sich meldet, erkennt die zugehörige Teilnehmerschaltung Schleifenschluss, worauf die Verbindung zwischen dem rufenden und dem gerufenen Teilnehmer über den Internverbindungssatz IS durchgeschaltet wird. Ein Internverbindungssatz IS wird immer dann belegt, wenn eine Internverbindung, d.h. ein zwei der gleichen Nebenstellenanlage angehörende Teilnehmer miteinander verbindender Sprechweg aufzubauen ist. Im Gegensatz dazu verlaufen Externverbindungen, d.h. kommende und gehende Verbindungen von bzw. zum öffentlichen Fernsprechnetz AMT über einen Amtsverbindungssatz AS. Im vorliegenden Zusammenhang interessieren vor allem die ankommenden Externverbindungen, also Verbindungen, über die ein am öffentlichen Fernsprechnetz AMT angeschlossener Teilnehmer einen bestimmten Teilnehmer TN in der Nebenstellenanlage NStA erreichen will. Ein externer Anruf wird im Amtsverbindungssatz AS erkannt. Das Amtssatz-Steuerwerk AS-ST meldet dem zentralen Steuerwerk ZS das Vorliegen des Externanrufes. Wiederum wird aufgrund der in die Nebenstellenanlage NStA gelangenden Wahlinformation im zentralen Steuerwerk ZS ermittelt, ob der gewünschte Teilnehmer TN umgeleitet ist oder nicht. Hierauf erfolgt die Wegesuche und die Durchschaltung des Weges zwischen dem belegten Amtssatz AS und dem gewünschten Teilnehmer TN über das Koppelfeld KF.

Den Teilnehmerstellen TNn (Fig. 1) mit Einzelanschluss ist wie üblich je eine Rufnummer zugeordnet. Die Teilnehmerstellen TNs gehören einem Mehrfachanschluss mit zugeordneter Rufnummer an, d.h. mehrere Teilnehmer benützen den gleichen Anschluss und besitzen einen eigenen Telefonapparat. Im Gegensatz dazu steht bei den Teilnehmerstellen TNe mehreren Teilnehmern nur ein einziger Telefonapparat zur Verfügung. Der betreffende Anschluss stellt in einem gewissen Sinne auch einen Mehrfachanschluss dar, weshalb im vorliegenden Zusammenhang sowohl die Teilnehmerstellen TNe als auch die Teilnehmerstellen TNs als einem Mehrfachanschluss zugehörig verstanden werden sollen. Erfindungsgemäss sind nun bei diesen Mehrfachanschlüssen neben der üblichen Rufnummer allen den Mehrfachanschluss mitbenützenden Teilnehmern, unabhängig davon, ob sie einen eigenen Telefonapparat besitzen oder nicht, individuelle Rufnummern zugeordnet.

Es handelt sich dabei um eine Art "fiktive" Rufnummern, da sie ja keinem eigentlichen Teilnehmeranschluss zugeordnet sind. Alle diese individuellen Rufnummern sind in einem Zuordnungsspeicher als demjenigen Mehrfachanschluss zugeordnet eingetragen, über den der betreffende Teilnehmer erreichbar ist. Als Zuordnungsspeicher kann vorzugsweise die bereits erwähnte Anrufumleitliste benützt werden. Soll eine Verbindung zu einem solchen Teilnehmer hergestellt werden, dann wird das zentrale Steuerwerk ZS diesen Teilnehmer aufgrund des Eintrages in der Anrufumleitliste wie einen umgeleiteten Teilnehmer behandeln und den Aufbau einer Verbindung zum entsprechenden Mehrfachanschluss veranlassen.

Damit nun an einem Mehrfachanschluss auch noch unterschieden werden kann, welcher der angeschlossenen Teilnehmer im Fall eines Anrufes tatsächlich gewünscht wird, ist erfindungsgemäss ferner vorgesehen, die Teilnehmer eines Mehrfachanschlusses derart unterschiedlich zu rufen, dass der gewünschte Teilnehmer rein akustisch sofort feststellen kann, ob der Anruf ihn betrifft oder nicht. Dies wird wie folgt erreicht:

In der in Figur 2 gezeigten Fernsprechnebenstellenanlage sollen den angerufenen Teilnehmerstellen zwei verschiedene Arten von Anrufen signalisiert werden, und zwar entweder ein Internanruf oder ein Externanruf. Ein Internanruf stammt von einer an der gleichen Nebenstellenanlage angeschlossenen Teilnehmerstelle, ein Externanruf hingegen stammt von einer am öffentlichen Fernsprechnetz AMT angeschlossenen Teilnehmerstelle. In Fig. 3 ist mit ausgezogenen Linien der "normale" Rhythmus für diese Beiden Anrufarten dargestellt. Im vorliegenden Beispiel soll der Rhythmus für den Internanruf (Fig. 3a) aus einer Rufphase Rp von 1 sec Dauer und einer Pausenphase Pp von 4 sec Dauer bestehen, währenddem beim Externanruf (Fig. 3b) die Einspeisung des Rufsignales während der Rufphase einmal unterbrochen wird und sich der Rufrhythmus daher aus 1/3 sec Ruf, 1/3 sec Unterbruch, 1/3 sec Ruf mit anschliessenden 4 sec Rufpause zusammensetzt. Der "normale" Rhythmus gilt für alle Teilnehmerstellen mit Einzelanschluss sowie für diejenige Teilnehmerstelle der Mehrfachanschlüsse, der die Rufnummer des Anschlusses zugeordnet ist. Für diejenigen Teilnehmerstellen eines Mehrfachanschlusses, die den Mehrfachanschluss mitbenützen und demzufolge als auf diesen Mehrfachanschluss umgeleitet gelten, wird der "normale" Rufrhythmus durch einen Zusatzruf ergänzt. Im folgenden wird der Einfachheit halber der Fall betrachtet, wo ein Mehrfachanschluss mit zwei Teilnehmern X, Xm belegt ist, nämlich mit dem ordentlichen diesem Anschluss zugeordneten Teilnehmer X sowie mit einem diesen Anschluss mitbenützenden Teilnehmer Xm. Der Teilnehmer Xm soll also im Falle eines Anrufes mit Zusatzruf gerufen werden, so dass er sofort wahrnehmen kann, ob der Anruf für ihn bestimmt ist. Der Zusatzruf wird bei beiden Anrufarten durch Verlängerung der Rufphase Rp um 1/3 sec Unterbruch und 1/3 Ruf erzeugt, was in Fig. 3a, b strichliert dargestellt ist.

Anhand des in Fig. 4 dargestellten Blockschaltbildes lässt sich das Prinzip der Rufsignaleinspeisung erläutern. Zunächst soll näher auf einen Rufinformationsspeicher SP eingegangen werden. Die Rufperiode, bestehend aus der Rufphase Rp und der Pausenphase Pp, wird in gleiche Zeitabschnitte aufgeteilt. Im vorliegenden Beispiel soll die Periodendauer von 5 sec in 16 gleichlange Zeitabschnitte aufgeteilt werden, wobei 13 ("normaler" Ruf) bzw. 11 (Ruf mit Zusatzruf) Zeitabschnitte auf die Pausenphase Pp und die übrigen 3 bzw. 5 Zeitabschnitte auf die Rufphase Rp entfallen. Der Rufinformationsspeicher SP enthält in einer ersten Ausbaustufe 16 Speicherplätze, die den 16 Zeitabschnitten zugeordnet sind. Unter einem Speicherplatz soll eine Gruppe von Speicherzellen verstanden werden, die zusammen adressierbar sind und in die ein Wort eingeschrieben werden kann. Der Inhalt dieser Speicherplätze wird zyklisch aufeinanderfolgend mittels eines nicht näher dargestellten Ausleseorganes ausgelesen und einer Vergleichsschaltung V zugeführt. Die zum Auslesen sämtlicher Speicherplätze des Rufinformationsspeichers SP notwendige Zeit entspricht der Rufperiodendauer. Das Ausleseorgan bleibt jeweils während einer der Dauer eines Zeitabschnittes der Rufperiode entsprechenden Zeitspanne auf einem Speicherplatz stehen. Diese Zeit beträgt demnach für eine Rufperiodendauer von 5 sec in etwa 312 msec; in einer praktischen Anwendung wird die Länge eines Zeitabschnittes zweckmässigerweise mit 320 msec festgelegt, was eine einfache Verarbeitung mit Binärzählgliedern ermöglicht. Das Ausleseorgan wird also in Abständen von 320 msec von einem Speicherplatz zum nächstfolgenden weitergeschaltet. Es ist denkbar, einen als Umlaufspeicher betriebenen Rufinformationsspeicher SP einzusetzen.

Das Einschreiben von der Erzeugung eines bestimmten Rufrhythmus dienenden Informationen in den Rufinformationsspeicher SP geht in der folgenden Weise vor sich: Sobald von der Vermittlungstechnik, d.h. von den entsprechenden Vermittlungseinrichtungen der Fernsprechanlage her bekannt ist, um was für eine Art von Anruf es sich für eine zu rufende Teilnehmerstelle handelt, werden diese Anrufart kennzeichnende Informationen in den Rufinformationsspeicher SP eingeschrieben. Dazu werden im Rufinformationsspeicher SP die für die betreffende Anrufart notwendigen Speicherplätze gesucht und in diese z.B. die Nummer des zu rufenden Teilnehmers einge- schrieben. Handelt es sich um einen Internanruf ohne Zusatzruf, dann wird in 3 aufeinander- folgende freie Speicherplätze des Rufin- formationsspeichers SP jeweils die Nummer des zu rufenden Teilnehmers eingeschrieben. Liegt hingegen ein Externanruf ohne Zusatzruf vor, dann werden zwei freie Speicherplätze des Rufinformationsspeichers SP belegt, die jedoch nicht aufeinanderfolgen, sondern einen Abstand von einem Speicherplatz aufweisen. In die beiden freien Speicherplätze wird die Nummer des zu rufenden Teilnehmers eingetragen. In Fig. 5a ist eine mögliche Belegungskombination für den Rufinformationsspeicher SP angegeben, und zwar soll einer Teilnehmerstelle X ein Internanruf und einer Teilnehmerstelle Y ein Externanruf signalisiert werden.

Für den Einschreibevorgang in den Rufinformationsspeicher SP ist die Stellung des Ausleseorganes massgebend. Soll für eine anzurufende Teilnehmerstelle die ihrer Anrufart entsprechende Information in den Rufinformationsspeicher SP eingeschrieben werden, dann werden zunächst unter den unmittelbar an den vom Ausleseorgan markierten Speicherplatz anschliessenden Speicherplätzen die für den Eintrag der jeweiligen Anrufart notwendigen Speicherplätze gesucht, d.h. für einen "normalen" Internanruf werden drei aufeinanderfolgende freie Speicherplätze benötigt und für einen "normalen" Externanruf sind zwei Speicherplätze notwendig, die einen Abstand von einem Speicherplatz aufweisen. Es ist denkbar, die Rufinformation für zwei mit einem "normalen" Externanruf zu belegende Teilnehmerstellen Y und Z ineinander zu "verschachteln". Fig. 5b zeigt eine derartige "Verschachtelung" der in Fig. 5a im Rufinformationsspeicher SP eingetragenen Teilnehmerstelle Y mit einer weiteren Teilnehmerstelle Z.

Für das Einschreiben von mit Zusatzruf anzu- rufenden Teilnehmerstellen wird in entsprech- ender Weise vorgegangen. In Fig. 6a ist eine Belegungskombination eingetragen, aufgrund der eine Teilnehmerstelle Xm eines Mehrfachanschlusses intern und eine Teilnehmerstelle Ym eines anderen Mehrfachanschlusses extern mit Zusatzruf gerufen werden sollen. Beliebige Verschachtelungen sind auch hier möglich, wie Fig. 6b zeigt. Die Information, ob eine Teilnehmerstelle als Teilnehmerstelle mit Zusatzruf zu rufen ist, wird der erwähnten Anrufumleitliste entnommen, wo diese Teilnehmerstellen als auf einen Mehrfachanschluss umgeleitet eingetragen sind. Es ist noch zu bemerken, dass die im Rufinformationsspeicher SP eingetragenen Rufnummern Xm, Ym die Rufnummern der entsprechenden Mehrfachanschlüsse sind, und nicht etwa die individuelle Rufnummer von einem Mehrfachanschluss mitbenützenden Teilnehmen. Der Buchstabe m wurde in Fig. 6 beigefügt, um klarer ersichtlich zu machen, welche Teilnehmerstellen mit Zusatzruf zu rufen sind.

Der Rufinformationsspeicher SP ist über das erwähnte Ausleseorgan mit einer Vergleichsschaltung V verbunden, an die ferner ein einen einzigen Speicherplatz aufweisender Zusatzspeicher ZSP angeschlossen ist. Ferner ist ein Speicherplatz vorgesehen, der als Einstelliste EL dient. In dieser Einstelliste EL ist jedem Teilnehmeranschluss der Nebenstellenanlage eine Speicherzelle zugeordnet. In diese Speicherzellen kann eine Information darüber, ob an den betreffenden Anschluss ein Rufsignal angelegt werden soll oder nicht, eingeschrieben werden. Die Speicherzellen der Einstelliste EL werden zyklisch aufeinanderfolgend von einer Abtasteinrichtung ABT abgefragt, die aufgrund der ausgelesenen Informationen Rufeinspeiseorgane REI veranlasst, die betreffenden Teilnehmerstellen TN durch Betätigung eines Schalters S mit einem Rufsignalgenerator RUG zu verbinden bzw. von diesem zu trennen. Die zur einmaligen Abfrage sämtlicher Speicherzellen der Einstelliste EL notwendige Zykluszeit sei viel kürzer als ein Zeitabschnitt der Rufperiode, z.B. 10 msec.

Die Informationen, ob eine Teilnehmerstelle gerufen werden soll oder ob eine Teilnehmerstelle aufgrund des Rufrhythmus (beim Uebergang von der Rufphase zur Pausenphase oder bei einer Unterbrechung innerhalb der Rufphase) vom Rufsignalgenerator RUG abgeschaltet werden muss, werden wie folgt in die Einstelliste EL eingetragen: Wenn das Ausleseorgan auf einen Speicherplatz des Rufinformationsspeichers SP gelangt, in dem die Nummer einer zu rufenden Teilnehmerstelle eingetragen ist, wird diese Teilnehmernummer in den Zusatzspeicher ZSP eingeschrieben. Sobald das Ausleseorgan nach 320 msec auf den nächst- folgenden Speicherplatz des Rufinformations- speichers SP gelangt, wird der Inhalt dieses Speicherplatzes mit dem Inhalt des Zusatzspeichers ZSP, d.h. mit dem Inhalt des vorher- gehenden Speicherplatzes des Rufinformations- speichers SP verglichen. Zeigt dieser Vergleich eine Nichtübereinstimmung, dann bedeutet dies, dass der im Zusatzspeicher ZSP eingetragenen Teilnehmerstelle das Rufsignal abgeschaltet und der im jetzt ausgelesenen Speicherplatz gegebenenfalls eingetragenen Teilnehmerstelle das Rufsignal zugeführt werden muss.

Es wird daher in der Einstelliste EL für die erstgenannte Teilnehmerstelle in der dieser Teilnehmerstelle zugeordneten Speicherzelle die Information "nicht Rufen" und in der der zweitgenannten Teilnehmerstelle zugeordneten Speicherzelle die Information "Rufen" einge- schrieben. Ergibt die erwähnte Vergleichs- operation hingegen eine Uebereinstimmung, dann bedeutet dies, dass für die im gerade ausgelesenen Speicherplatz eingeschriebene Teilnehmerstelle in der Einstelliste EL die Information "Rufen" bereits eingetragen ist. In der Einstelliste EL wird daher nichts Neues eingetragen, und die Nummer dieser Teilnehmerstelle wird hierauf im Zusatzspeicher ZSP gelöscht. Nach Abschluss der Vergleichs ist im Zusatzspeicher ZSP somit nichts oder aber die Nummer der Teilnehmerstelle eingetragen, für die in der Einstelliste EL die Information "nicht Rufen" einzuschreiben ist. Die Information "Rufen" kann durch Setzen eines Bit in der der betreffenden Teilnehmerstelle zugeordneten Speicherzelle eingetragen werden, wogegen die Information "nicht Rufen" durch Löschen dieses Bit eingetragen wird. Mit dem beschriebenen Vorgehen ist es also möglich, die Abschaltung des Rufsignales von einer Teilnehmerstelle innerhalb von 10 msec, nachdem für diese Teilnehmerstelle in der Einstelliste EL die Information "nicht Rufen" eingetragen worden ist, vorzunehmen. Entsprechendes gilt für die Anschaltung des Rufsignales, wobei hier noch eine Verzögerung eintreten kann, die davon abhängig ist, wie stark der Rufinformationsspeicher SP belegt ist. Ist dessen Belegung derart, dass beim Einschreiben der Nummer einer neu zu rufenden Teilnehmerstelle jeweils die unmittelbar an den vom Ausleseorgan markierten Speicherplatz anschliessenden Speicherplätze zur Verfügung stehen, dann beträgt die Verzögerung zur Anschaltung des Rufsignales an diese Teilnehmerstelle im ungünstigsten Fall 320 msec.

Bei einer von der Vermittlungstechnik bewirkten, d.h. im Gegensatz zum vorstehend beschriebenen Fall in einem beliebigen Zeitpunkt innerhalb der Rufperiode vorzunehmenden Abschaltung des Rufsignales (z.B. durch Auflegen des Handapparates beim rufenden Teilnehmer oder durch Abheben des Handapparates beim gerufenen Teilnehmer) werden der Rufinformationsspeicher SP und der Zusatzspeicher ZSP nach der betreffenden Teilnehmernummer abgesucht und diese in den entsprechenden Speicherplätzen gelöscht. Zusätzlich wird in der Einstelliste EL in der entsprechenden Speicherzelle die Information "nicht Rufen" eingeschrieben, so dass das Rufsignal auch in diesem Fall innerhalb von 10 msec von der betreffenden Teilnehmerstelle abgeschaltet wird.

Die beschriebenen Vorgänge zum Eintragen von Rufinformationen in den Rufinformationsspeicher SP und in die Einstelliste EL sowie zum Auslesen der Informationen aus der Einstelliste EL und zum Ansteuern der Rufeinspeiseorgane REI können in einer rechnergesteuerten Fernmeldeanlage programmiert werden, wobei der richtige Ablauf durch eine zentrale Prozessoreinheit steuerbar ist.

Dem vorstehend beschriebenen Ausführungsbeispiel wurde der einfachste Fall, wo ein Mehrfachanschluss von zwei Teilnehmern benützt wird, zugrundegelegt, wobei dem Teilnehmer X bzw. Y bzw. Z die Rufnummer des Mehrfachanschlusses zugeordnet ist. Dieser Teilnehmer ist in der Regel auch der Teilnehmer, dem diese Teilnehmerleitung von allem Anfang an zugeordnet wurde, weshalb er zweckmässigerweise diese Rufnummer auch beibehält. Die Erfindung lässt sich jedoch auch auf Mehrfachanschlüsse mit mehr als zwei Teilnehmern anwenden, indem alle weiteren Teilnehmer in der Anrufumleitliste als auf den Mehrfachanschluss umgeleitet eingetragen werden und diese Teilnehmer mit unterschiedlichem Rufrhythmus gerufen werden. Hierzu bedarf es lediglich der Einführung unterschiedlicher Zusatzrufe, deren Realisierung mit dem beschriebenen Umlaufspeicherkonzept relativ einfach ist, da dieses Konzept eine praktisch beliebige Ausgestaltung des Rufrhythmus zulässt. Bei mehreren an der Mehrfachanschlussleitung angeschlossenen Teilnehmerapparaten werden sämtliche Apparate gleichzeitig gerufen; der tatsächlich gewünschte Teilnehmer kann jedoch aufgrund des ihm zugeordneten charakteristischen Rufrhythmus erkennen, dass der Anruf für ihn bestimmt ist und er kann den Anruf entgegennehmen.

Mit einer Weiterbildung der Erfindung können die Teilnehmer eines Mehrfachanschlusses mit teilnehmereigenen Apparaten davon entbunden werden, rein akustisch erkennen zu müssen, ob ein Anruf für sie bestimmt ist oder nicht. Dazu werden die den Teilnehmern zugehörigen Apparate mit einer Auswerteeinrichtung ausgerüstet, die aufgrund des auf der Mehrfachanschlussleitung eintreffenden Rufrhythmus zu erkennen vermag, ob der Ruf den betreffenden Teilnehmer betrifft. Ist dies der Fall, gibt die Auswerteeinrichtung die Rufempfangsorgane dieses Teilnehmerapparates frei. Es wird also nur eine Teilnehmerstelle, nämlich die des tatsächlich gewünschten Teilnehmers, gerufen, was im Gegensatz zum vorher beschriebenen Beispiel einen erhöhten Bedienungskomfort für die Teilnehmer eines Mehrfachanschlusses darstellt.

**Patentansprüche**

1. Verfahren zum Betrieb einer Fernsprech-, insbesondere Fernsprechnebenstellenanlage mit mehrfach ausgenutzten Teilnehmeranschlussleitungen, in der neben der einem Mehrfachanschluss wie üblich zugeordneten Rufnummer allen diesen Mehrfachanschluss mitbenützenden Teilnehmen (TNe; TNs) unterschiedliche individuelle Rufnummern zugeordnet werden und in der bei Anruf eines Teilnehmers mit individueller Rufnummer dieser individuell gerufen wird, dadurch gekennzeichnet, dass die individuellen Rufnummern in einem auch die übrigen umzuleitenden Rufnummern enthaltenden Anrufumleitungsspeicher festgehalten und im Falle eines Anrufes als auf die Rufnummer des betreffenden Mehrfachanschlusses umgeleitet behandelt werden, und dass demzufolge die Einspeisung einer bestimmten für den gewünschten Teilnehmer (TNe; TNs) charakteristischen Rufsignalisierung in die Mehrfachanschlussleitung veranlasst wird.

2. Verfahren nach Anspruch 1, dadurch gekennzeichnet, dass zur Erzeugung charakteristischer Rufsignalisierungen für die Teilnehmer (TNe, TNs) eines Mehrfachanschlusses die normalen Rufphasen durch eine oder mehrere Zusatzrufphasen ergänzt werden.

3. Verfahren nach Anspruch 1 oder 2, dadurch gekennzeichnet, dass bei Mehrfachanschlüssen mit mehr als einer Teilnehmerstelle (TNs) die teilnehmerindividuellen Rufsignalisierungen in den Teilnehmerstellen (TNs) ausgewertet werden und aufgrund des Auswerteergebnisses jeweils nur die tatsächlich gewünschte Teilnehmerstelle gerufen wird.

**Revendications**

1. Procédé pour l'exploitation d'une installation téléphonique, en particulier d'une installation téléphonique à central privé avec des lignes d'abonnés à emploi multiple, dans laquelle on associe, en plus du numéro d'appel associé habituellement à un raccordement multiple, des numéros d'appel individuels et différents à tous les abonnés (TNE, TNs) reliés à ce raccordement multiple, et dans laquelle, lors de l'appel d'un abonné à numéro d'appel individuel, celuici est appelé individuellement, caractérisé par le fait que les numéros d'appel individuels sont retenus dans une mémoire de déviation des appels qui contient également les autres numéros d'appel à dévier et sont, dans le cas d'un appel, traités comme s'ils étaient déviés sur le numéro d'appel du raccordement multiple considérée, et qu'en conséquence l'amenée d'une signalisation d'appel caractéristique et destinée à l'abonné souhaité (TNE, TNs) est provoquée dans le raccordement multiple.

2. Procédé selon la revendication 1, caractérisé par le fait que pour produire la signalisation d'appel caractéristique pour les abonnés (TNE, TNs) d'un raccordement multiple, les phases d'appel normales sont complétées par une ou par plusieurs phases d'appel supplémentaires.

3. Procédé selon la revendication 1 ou 2, caractérisé par le fait que dans le cas de raccordements multiples avec plus qu'un poste d'abonné (TNs) les signalisations d'appel individuelles par abonné sont évaluées dans les postes d'abonnés (TNs) et, en fonction du résultat de l'évaluation, seul est appelé chaque fois le poste d'abonné effectivement souhaité.

**Claims**

1. A process for the operation of a telephone, in particular a p.b.x. telephone system with subscriber terminal lines, for multiple utilization, wherein in addition to the call number, conventionally assigned to a multiple terminal, all the subscribers (TNe; TNs) who use the multiple terminal have assigned different individual call numbers, and wherein on calling a subscriber having an individual call number the latter is individually called, characterised in that the individual call numbers are retained in a call diversion store which contains the remaining call numbers to be diverted, and in the event of a call are treated as being diverted to the call number of the respective multiple terminal, and accordingly feeding of a specific call signal characteristic of the required subscriber (TNe; TNs) into the multiple terminal line is initiated.

2. A process as claimed in Claim 1, characterised in that the normal call phases are supplemented by one or more additional call phases in order to produce characteristic call signals for the subscribers (TNe; TNs) of a multiple terminal.

3. A process as claimed in Claim 1 or 2, characterised in that in multiple terminals with more than one subscriber station (TNs) the subscriber-individual call signalling processes are analysed in the subscriber stations (TNs) and only the actually required subscriber station is called on the basis of the analysed result.

FIG. 1

FIG. 2

FIG.3

FIG.4

FIG. 5

FIG. 6